# EUROPEAN PATENT SPECIFICATION

(11) **EP 3 478 487 B1**
(45) Date of publication and mention of the grant of the patent: **23.07.2025**
(21) Application number: 17841795.2
(22) Date of filing: 26.06.2017
(51) Int. Cl.: B32B 27/32, B32B 27/08, B65D 65/40

(54) **COEXTRUDED, POLYETHYLENE SKINS ON POLYPROPYLENE CORE**
COEXTRUDIERTE POLYETHYLENHÄUTE AUF POLYPROPYLENKERNEN
REVÊTEMENTS DE POLYÉTHYLÈNE CO-EXTRUDÉS SUR NOYAU DE POLYPROPYLÈNE

(30) Priority: 19.08.2016 US 201662377386 P
(43) Date of publication of application: 08.05.2019
(73) Proprietor: Jindal Innovation Center SRL, 6761 Virton (BE)
(72) Inventor: LEGER, Christian, F - 54430 Heumon (FR); LOCKHART, Mark, L - 1150 Luxembourg (LU)
(74) Representative: Hindles Limited
(86) International application number: PCT/US2017/039186
(87) International publication number: WO 2018/034735

(56) References cited:
- EP-B1- 1 250 223
- US-A1- 2001 028 929
- US-A1- 2001 028 929
- US-A1- 2003 211 298
- US-A1- 2005 238 874
- US-A1- 2005 238 874
- US-A1- 2012 070 644
- US-A1- 2013 212 983
- US-A1- 2013 212 983
- US-A1- 2015 174 868

## Description

### REFERENCE TO RELATED APPLICATION

This application is a Patent Cooperation Treaty application, which claims priority to United States provisional patent application serial number 62/377,386 filed August 19, 2016.

### FIELD

This disclosure relates to compositions, structures, and methods for making sealable films having ultra-thin, polyethylene-based skin layers on a polypropylene-containing core layer with high seal strengths and other desirable properties in the film and laminate industries.

### BACKGROUND

Polyethylene and polypropylene are used in the film industry for labeling, packaging, and other applications. Unfortunately, each of these polymers have certain divergent properties that the film industry would sometimes prefer were shared. For instance, polyethylene tends to exhibit superior seal-strength, hot-tack, and seal-integrity as compared to polypropylene, which tends to exhibit superior optics, less haze, stretching through a standard tenter process as compared to polyethylene. A need, therefore, exists for combining the foregoing desirable properties of these polymers for use in various applications, such as on vertical packaging machines, in order to process sealable films with a low COF and hot slip.

### SUMMARY

The invention is set out in the appended set of claims. In one aspect, disclosed is a sealable film, which includes a sealant layer comprising a skin layer on an intermediate layer, wherein the skin layer comprises antiblock particles, one or more ethylene-co-α-olefins and a thickness from 0.25 µm through 4.0 µm, wherein α-olefins polymerized with ethylene in the one or more ethylene-co-α-olefins comprise one or more C₄-C₁₀ α-olefins. The intermediate layer comprises one or more ethylene-co-α-olefins, antistatic agent, slip agent and optionally, thermoplastic olefin copolymer resins, and has a thickness from 1 µm through 15 µm, wherein α-olefins polymerized with ethylene in the one or more ethylene-co-α-olefins comprise one or more C₄-C₁₀ α-olefins. Further, the sealable film includes a core layer having a first side and a second side, wherein the core layer comprises polypropylene, antistatic agent, slip agent, one or more soft polymers and the first side is at least proximate to the sealant layer. The sealable film is coextruded and machinable into a vertical form fill seal packaging or a stand-up pouch. The sealable film comprises a seal strength of at least 1275 g/25mm at 120°C, performed at 5 mm/s on a Lako sealer Model SL10 equipped with crimp jaws, operating under a pressure of 25N/cm² for 0.20s, a hot-tack strength of at least 400g/25mm within a temperature range from 25 to 40°C performed at 8.3cm/s on a Lako hot tack Model SL10 equipped with crimp jaws, operating under a pressure of 25 N/cm² for 0.50 s, and the crimp jaws for measurement of the hot-tack strength being heated from 60 to 150°C at measurement intervals of 10°C, and a dynamic coefficient of friction of <0.50 on metal performed under ASTM D 1894 method e.. In other example embodiments, the seal strength may exceed 89 g/mm (2270 g/inch) or even 118 g/mm (3000 g/inch) at 120°C. And in still other example embodiments, the sealable film may be laminated to a substrate.

### BRIEF DESCRIPTION OF THE SEVERAL VIEWS OF THE DRAWINGS

So that the manner in which the above recited features, advantages and objects of the present disclosure are attained and can be understood in detail, a more particular description of this disclosure, briefly summarized above, may be had by reference to the embodiments thereof which are illustrated in the appended drawings.

It is to be noted, however, that the appended drawings illustrate only typical embodiments of this disclosure and are therefore not to be considered limiting of its scope, for this disclosure may admit to other equally effective embodiments.
FIG. 1 presents example films in accordance with this disclosure.
FIG. 2 provides measurements of various films in accordance with this disclosure.
FIG. 3 presents example films in accordance with this disclosure.

### DETAILED DESCRIPTION

Below, directional terms, such as "above," "below," "upper," lower," "front," "back," "top," "bottom," etc. are used for convenience in referring to the accompanying drawings. In general, "above," "upper," "upward," "top," and similar terms refer to a direction away the earth's surface, and "below," "lower," "downward," "bottom," and similar terms refer to a direction toward the earth's surface, but is meant for illustrative purposes only, and the terms are not meant to limit the disclosure.

Various specific embodiments, versions and examples are now be described, including exemplary embodiments and definitions that are adopted herein for purposes of understanding. While the following detailed description gives specific preferred embodiments, those skilled in the art will appreciate that these embodiments are exemplary only, and that the disclosure can be practiced in other ways. For purposes of determining infringement, the scope of the invention will refer to the claims.

Generally disclosed are compositions, structures, and methods for coextruding a sealant layer with a substrate, which contains at least a core. The sealant layer may include a thin, skin layer and an intermediate layer, *i.e.,* tie layer. The skin and intermediate layers may include a catalyzed (e.g., metallocene, Ziegler-Natta, etc.), linear, low-density polyethylene ("mLLDPE") copolymerized with a 1-α-alkene (e.g., C₄-C₁₂, such as Evolue^{®} SP1540 or SP0540, or Exceed 3812CB), *i.e.,* collectively, a thick "coPE." The skin layer, which may be from 0.25 µm to 0.50 µm, 0.50 µm to 1.0 µm, 1.0 µm to 2.0 µm, 2.0 µm to 3.0 µm, or even 3 µm through 4.0 µm, may further include additive(s) to produce a variety of properties, e.g., coefficient of friction, slip, antistatic, etc. in a cost-effective manner and/or without permeating or otherwise affecting the remainder of the sealant layer and/or multi-layered film in general. The intermediate layer optionally includes one or more compatibilizers, e.g., thermoplastic olefin copolymer resins, such block copolymers, ethylene-propylene ("EP") copolymers, and specifically, for example, Lyondell Basell^{®} Adflex^{™} X500F. This coPE, *i.e.,* coextruded sealant layer, may be coextruded with or coat a first side, and, optionally, a second side of a polypropylene ("PP") core layer, wherein the sealant layer is thicker than the core layer, and whereby these multi-layered films may be oriented in at least one direction and/or optionally laminated to a substrate, such as polyester ("PET"). The core's second side may include another one or more coextruded or coated layers, including primer(s), additional tie layer(s), additional sealing layer(s), metallized layer(s) or coated metal layer(s), layer(s) having additive(s) for desired properties, printing layer(s) with or without printing thereon, other layer(s), or combinations thereof. Furthermore, these multi-layered films and laminates exhibit remarkable sealing behaviors, such as high seal strengths, broad hot-tack windows at relatively low temperatures, and excellence in both seal impact and seal integrity through contamination, as well as possess noteworthy optical properties, such as low haze and high gloss, all the while providing or allowably adjusting to provide low coefficient of friction (including against metal) and low hot-slip in the thin, skin layer.

The disclosed multi-layered, bi-oriented films have composite structures that provide hermetic seals to packages, even through contaminants, with very high seal strengths, excellent hot tack and good slip, for use in a variety of applications, including on packaging machines. A sealable side of the multi-layered films may include layers A/B/C, where C is a core layer optionally based mainly on polypropylene or a mix of polypropylene with another polyolefin. A is a thin skin layer, such as from 0.25 to 3 µm of an ethylene-co-α-olefin of 4 to 10 carbon atoms, an ethylene-propylene ("EP") copolymer, an ethylene-propylene-butene ("EPB") terpolymer, combinations thereof, and/or any other standard sealant polyolefin resin formulated for antiblock and slip properties. B is a thick tie-layer from 1.0 to 15 µm, optionally based on an ethylene co-α-olefin of 4 to 10 carbon atoms, wherein B is thicker than A. As stated previously, on the other or second side of the core layer C. additional layer(s) may be coextruded to bring additional properties as barrier for instance, and/or be treated, *e*.*g*., corona, flame, plasma, chemical, etc., to be able to print, laminate, coat, metallize, combinations thereof, and/or otherwise in order to functionalize the other side of the film to tailor desired properties for an/or to a particular application. Each layer may contain specific additives to be able to reach a low coefficient of friction ("COF") to be used on packaging machines or otherwise.

In recent years, flexible containers produced out of multi-layered flexible films, such as bags and pouches, predominate the marketplace These types of containers are usually produced using horizontal form fill seal packaging ("HFFS"), vertical form fill seal packaging ("VFFS"), or Stand-up Pouch ("SUP") packaging equipment and processes. Packaging goods is a finer art than a casual observer realizes, and to ensure proper packaging of goods, various issues abound. For instance, multi-layered structures often require high seal strengths, e.g., above 1500g/25mm and more preferably above 2500g/25mm, in order to securely wrap heavy goods on which gravity acts within the packaging produced by VFFS or SUP. Because filling of these packages occurs when the bottom seal is not fully solidified, then both the hot-tack window and hot-tack strength must be excellent. For wrapping of powders, SUP and VFFS packaging machines may be used, and in such cases, seal through contamination is also a very important parameter to consider. The sealant side must be usable on a packaging machine, and, therefore the COF of the sealant side of the multilayered film may need adjusting and, therefore, needs to be adjustable. These are just a few examples of issues ever-present in proper packaging

The multilayered films encountered in such packaging areas are mainly based on polyethylene ("PE") sealant webs. Such webs may occur by lamination of a LLDPE/LDPE blend blown film (*e.g.,* 30 to 40 µm) to another web as oriented polyesters ("OPET"), oriented polyamides ("OPA") or oriented polypropylenes ("OPP"). Usually, PE web is relatively thick to permit excellent seal through contamination and hermeticity properties, but also to reach mechanical properties that permit use on a packaging machine. Such thick webs, however, often exhibit poor optics, *i.e.,* high haze levels, which may be counter to marketability. In addition, PE often exhibits relatively low barrier properties. This disclosure combines the advantages of PP's low haze, good mechanical properties, *i.e*., elastic modulus in machine and transverse orientation directions ("MD" and "TD," respectively), and barrier properties with the advantages of PE's sealing strengths, hot tack, and seal integrity even through contamination.

U.S. patent number 5,888,648 discloses a multi-layered film for providing hermetic seals in packages. The structure of the film includes a substrate layer and a sealant layer, wherein the sealant layer, itself, includes two layers: an intermediate layer and a sealing layer, wherein the intermediate layer is of different composition than the sealing layer The intermediate layer may be LDPE, LLDPE, EPB terpolymers, EP copolymers, plastomers and blends of thereof. Such films, for example, do not provide comparable performances to the LDPE/LLDPE blended laminates disclosed herein.

U.S. patent number 5,376,437 discloses a three-layer, sealable film having burst strength for packaging bags. The multi-layered film relies on a "cushion" layer combined with the sealant layer, somewhat similar in function to the "intermediate layer" of U.S. patent number 5,888,648. A key property of the cushion and sealant layer is the respective degree of surface orientation of each layer. The cushion layer should have a lower degree of surface orientation than the sealant layer by a specific amount. The seal strengths recorded by such films are from 260 to 890 g/cm, *i.e.,* 660 to 2260 g/in.

U S. patent number 6,326,068 discloses a four-layer multi-layered film for hermetic seal via use of a thick, *i.e.,* 3-15 µm, intermediate layer for providing compliance during sealing, and a thinner, *i*.*e*., c. 1 µm, heat sealable layer for providing adhesivity. This patent also discloses that random EP copolymers and EBP terpolymers are suitable for the intermediate compliance layer. Nevertheless, the sealing strengths are far from the LDPE/LLDPE blended laminates disclosed herein.

U.S. patent number 5,817,412 describes a three-layer coextruded film for low seal initiating temperature packaging films using two of the three coextruded layers for heat seal properties. The thickness of both layers is relatively low at 0.4 and 1.5 µm respectively, and that does not allow this film to reach high seal strengths.

U.S. patent number 5,527,608 discloses a four-layer heat sealable film suitable for metallization that exhibits high heat seal strength and hermeticity. Nevertheless, the sealing strengths are from 400 to 640g/in at 260°F (126.7°C), which are far from the LDPE/LLDPE blended laminates disclosed herein.

U.S. patent number 9,120,294 discloses a film having a coextruded heat sealable skin layer and a PP core layer blended with other different polyolefins, such as metallocenecatalyzed PB elastomer and EP elastomer. The seal strengths reported with such films at 250°F (121°C) are from 713 to 1779 g/in, which are far from the LDPE/LLDPE blended laminates disclosed herein. Moreover, this reported seal strength range is believed to be erroneous because the written description, if accurate, only supports an upper limit of 1227 g/in and not 1779 g/in.

U.S. published patent application number 2002/0164470 discloses a two-layer hermetically sealable film, which includes a base layer with a softening additive and a coextruded heat sealable layer. The heat sealable layer includes an EP copolymer and an EPB terpolymer. The base layer is a PP combined with softening additives, which may include EP copolymers, EPB terpolymers, and hydrocarbon resins with cyclopentadiene-based hydrocarbon resin being preferred. The base layer becomes the compliant layer for heat sealability improvement. However, a very thick sealant layer, *i.e.,* up to 15 µm, must be used in conjunction with the softening additive. In addition, despite high sealing strengths, *i.e.,* up to 2850g/in at 260°F (126.7°C), this film is still far from the LDPE/LLDPE blended laminates disclosed herein, and the 6% of CP hydrocarbon resin alters the mechanical properties of PP, and, therefore, the processability of the PP-based film, normally an undesirable situation. U.S. published patent application number 2013/0212983 discloses multi-layer laminated structures. Such structures include a multi-layer polymeric film having a Layer A that includes at least one polymer and a polymeric sealant layer adjacent to Layer A. The sealant layer has a surface roughness, Ra>5.0 and a Peak Count Value, Pc>50.0. The multi-layer laminated structures also include a substrate in surface contact with the multi-layer polymeric film, typically opposite the sealant layer. Such structures have a top seal and/or side seal of the polymeric sealant layer to itself has a seal strength of >5.00×10² grams/inch (1.93 N/cm) at 177° C. The multi-layer films may be transparent, contain a cavitating agent, or are pigmented to form an opaque film. Also, the multi-layer film may be metallized or coated with a barrier coating.

As used herein, "polymer" may be used to refer to homopolymers, copolymers, interpolymers, terpolymers, etc. having any form of tacticity. Likewise, a "copolymer" may refer to a polymer comprising two monomers or to a polymer comprising three or more monomers.

As used herein, "intermediate" is defined as the position of one layer of a multi-layered film, wherein said layer lies between two other identified layers. In some embodiments, the intermediate layer may be in direct contact with either or both of the two identified layers. In other embodiments, additional layers may also be present between the intermediate layer and either or both of the two, identified layers.

As used herein, "elastomer" is defined as a propylene-based or ethylene-based copolymer that can be extended or stretched with force to at least 100% of its original length, and upon removal of the force, rapidly (*e.g*., within 5 seconds) returns to its original dimensions.

As used herein, "plastomer" is defined as a propylene-based or ethylene-based copolymer having a density in the range of 0 850 g/cm³ to 0.920 g/cm³ and a DSC melting point of at least 40° C.

As used herein, "substantially free" is defined to mean that the referenced film layer is largely, but not wholly, absent a particular component. In some embodiments, small amounts of the component may be present within the referenced layer as a result of standard manufacturing methods, including recycling of film scraps and edge trim during processing.

As used herein, "thermoplastic" is defined as a propylene-based or ethylene-based copolymer that becomes plastic on heating and hardens on cooling and is able to repeat these processes.

In creating the disclosed films and methods, objectives for some of the films included:
(1) Seal integrity. A desired level for coextruded, biaxially oriented 40 µm coPE skins on PP films laminated onto 12 µm PET was a leak that is equivalent to a maximum diameter of 50 µm. Such a leak maximum is considered excellent for preventing contamination.
(2) Seal strengths. A desired level was at least 1500-2000g/25mm, optionally including some hot-tack.
(3) Seal impact strength (drop test). Today's products are limited, generally, to 450g of filling weight, which is too low. A desired level was fixed on 12PET//40PE laminates at > 4000g/25mm at 120°C and> 6000g/25mm at 150°C after reference measurements.
(4) Slip. Films must slip-to-pass on VFFS packaging on both cold and hot on metal. Also, coefficient of friction COF may need to be adjusted on metal and hot slip.
(5) COF. COF adjustment technology should not have adverse impacts, *e.g.*, barrier degradation, bond-strength degradation, etc.

As mentioned previously, the disclosed films include polypropylene in the core. The core may contain migratory slip agents, antistatic agents, or any kind of additives to bring specific properties to the films, such as slip, antistatic, flame-retardant, oxygen-scavenger, antimold, antibacterial, UV-absorber, light-absorber, pigment, cavitating, oxidative, tagging, etc. Burying additives in the core may contribute to achieving the desired COP. In addition, the PP of the core layer may be blended with "soft polymers," such as EP copolymers, EPB terpolymers, HCR resins, and so forth in order to increase the core softness. Soft polymers may include those polymers having a flexural modulus (ASTM D790) of less than about 552 MPa (80 kpsi), preferably, less than about 345 MPa (50 kpsi), and most preferably less than about 138 MPa (20 kpsi). Additionally or alternatively, soft polymers include those polyolefin copolymers or terpolymers having a melting point temperature equal to or less than about 288°F (142°C), more preferably equal to or less than about 248°F (120°C), and most preferably equal to or less than about 212°F (100°C). Additionally or alternatively, soft polymers include those resins having a Vicat softening point (VSP) (ASTM D 1525) of less than or equal to about 221°F (105°C), more preferably of less than or equal to about 176°F (80°C), and most preferably of less than or equal to about 150°F (65°C).

On one side of the core is deposited, by a coextrusion process, a thick layer, *e.g.,* 1.0 to 15 µm, preferably 3 to 7 µm, of ethylene α-olefin(s) from 4 to 10, more preferably from 5 to 8, carbon atoms having a melt flow rate at 190°C under a load of 2.16 kg in the range of 0.1 to 50 g/10 min, and a density in the range of 875 to 970 kg/m³ on top of this thick layer is deposited a thin layer, *e.g.,* <1.5 µm thick, more preferably <1.0 µm, containing also copolymer α-olefin(s) from 4 to 10, more preferably from 5 to 8, carbon, EP copolymer(s), EPB terpolymer(s), combinations thereof, or any other sealant polyolefins and anti-block particles. Any kind of antiblock particles, synthetic or natural, may be used with preference to synthetic silicas or silicates having a size from 2 to 15 µm, more preferably from 3 to 10 µm. The thin layer may impart anti-block properties to the film without penalizing the optics, *i*.*e*., haze, because of the particles themselves The particles' density per unit surface remains relatively low despite high amount of particles inside the thin layer. The amount of particles used in the thin layer may be from 1000 to 20000 ppm, more preferably from 3000 to 15000 ppm. Collectively, these three layers exhibit a very high cohesion, sealing strength is exceptionally high with good hot tack and very high seal hermeticity, even though contamination. The other side of the core may be functionalized by coextruding a thin skin of EP copolymer(s), EPB terpolymer(s), combinations thereof, or a barrier polymer, which may include two layers, namely a compatibilizer layer between PP-based core and the barrier layer itself that can be surface-modified by corona, flame, plasma or chemical treatment. Most of the above-mentioned sealing properties tend to be very close to laminates using 40 µm LLDPE/LOPE-blended webs with the following PP advantages: optics, *i.e..* haze; mechanical properties in MD and TD as Young modulus; tress and train at break; and dimensional stabilities. The structure being stretched 3 to 7 times in MD and 5 to 12 times in TD, as in a standard OPP production line, the barrier properties, mechanical properties and optics, become very close to a standard OPP film, all the while keeping sealing properties close to PE.

On the functionalizable side, *i.e.,* opposite to sealant side, of the film, it is possible to print, deposit a coating, deposit a metal layer or a metal oxide layer, laminate another web, combinations thereof, or otherwise modify in order to provide and/or enhance some specific properties, *e*.*g*., barrier, of the sealable film. Other properties may also be enhanced depending on the modification type of the functionalizable side

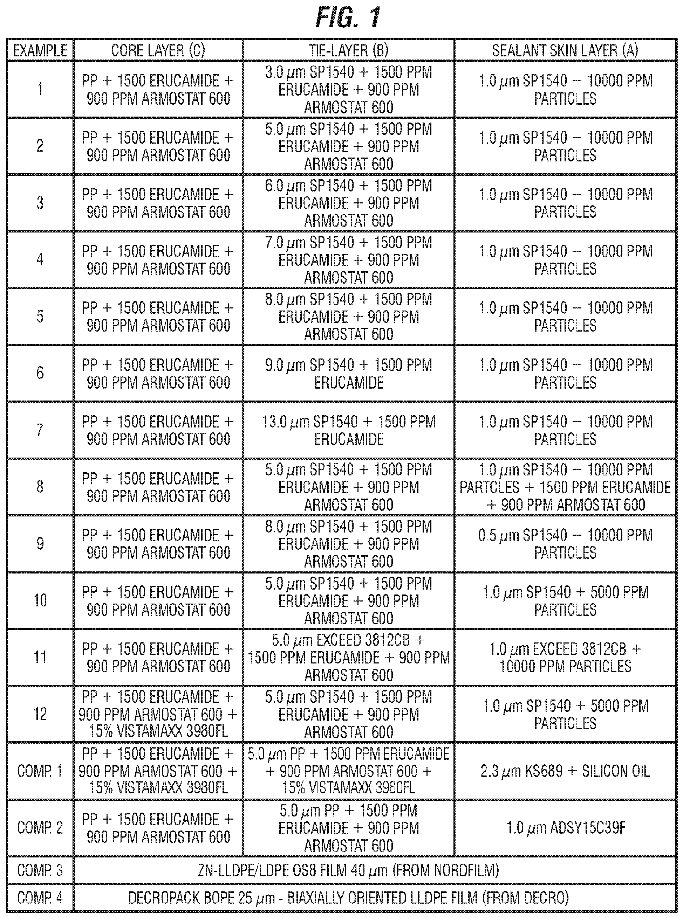

Figure 1 presents example films, and immediately below is information about the compositions used in making these films.
- "PP" was ExxonMobil PP4712E1 a PP MFI 3. an isotactic OPP film grade.
- "1500ppm Erucamide + 900ppm Armostat 600" are brought by AT106AS from Schulman.
- "PE-co-C6-α-olefin" was Mitsui Evolue SP1540 or ExxonMobil Exceed 3812CB.
- "Particles" were silicate 6-7 µm brought by Ampacet 101830.
- "Softener" used m core layer was an EP block copolymer Vistamaxx^{®} 3980FL from ExxonMobil.
- "Adsyl5C39F" is an EPB terpolymer coming from Basell.
- "KS689" is a broad range sealant resin coming from Ineos.
- "OS8" is a ZN-LLDPE/LDPE blend blown film coming from NordFilm.
- "Decropack BOPE" is a LLDPE biaxially stretched coming from Decro.
- "12PET" is an OPET film coming from Rexor (Rexfilm PET12 corona).
- The solvent based adhesive used to produce the 12PET laminates is Liofol LA3966-21 with the LA6136 hardener from Henkel.

Comp. 1 to 4 are comparative examples not encompassed by the wording of the claims but are considered as useful for understanding the invention. In Figure 1, the films from Example 1 through Comp. 2 are 30 µm thick. In Examples 1 to 12 and for Comp. 1 and Comp. 2, an EPB terpolymer (1.0 µm Adsyl 5C39F) was coextruded and corona-treated on the other side of the core layer.

The 12 PET laminates were prepared by laminating the Adsyl5C39F-treated layer (*i.e.,* Examples 1 to Comp. 3 in Figure 1 to a 12 µm PET film's treated side using 1.5g/m² solvent-based adhesive deposited by a gravure process and dry in-line in an oven. 40 µm OS8 laminates were prepared the same way, wherein the treated side of OS8 film was against the treated PET side. The nomenclature of the laminates is the following: 12 PET//Example 6 for lamination of the treated side of Example 6 (Adsyl5C39F-side) with 12 PET treated side.

The measurement methods employed were:
- Haze measurements were performed on a Hazemeter BYK Gardner model Haze Gard Plus. The results are expressed in haze %.
- Dynamic COF measurements are performed on a friction peel tester Albert Instrument Model 225-1, using a 200g weight. The results are expressed in unitless COF sealant side against sealant side and the COP/metal is sealant side against aluminum foil of 9 µm.
- Seal strength at 120°C and 140°C were performed at 5 mm/s on a Lako sealer Model SL10 equipped with crimp jaws, operating under at a pressure of 25N/cm², during 0.20s. The results are expressed in g/25mm for each temperature.
- Hot-tack measurements (windows and strength) are performed at 8.3 cm/s on a Lako hot tack Model SL10 equipped with crimp jaws, operating under at a pressure of 25 N/cm², during 0.50 s. The jaws are heated from 60 to 150°C per step of 10°C. The results are expressed in g/25mm for each temperature. The max strength obtained is noted and the hot-tack window is defined as the temperature range in which the sealing results are above 200g/25mm.
- To measure seal integrity, a package is made manually on an Otto Brugger HSG/ETK equipped with flat jaws at 120°C, and operating under a pressure of 25 N/cm² during 0.20 s. For seal integrity through contamination, three seals of the package are made normally and the area of the last one is contaminated by coffee powder and then immediately sealed. The packs obtained are tested on a SKYE tester PT1000 using an overpressure of 20 mbar and monitoring the pressure loss with time. The results are given in µm leak equivalent.
- MD and TD elastic modulus are measured on a Lloyds Instrument LR5K (ASTM method).
- Standards used in this disclosure include. (1) seal making: ASTM F2029, (2) seal reading. ASTM F88; (3) hot-tack seal, *e.g.,* LAKO: ASTM F1921 method B; (4) seal integrity: ASTM F2095 method A; (5) slip properties: ASTM D 1894 method e; and (6) modulus: ASTM D 882.

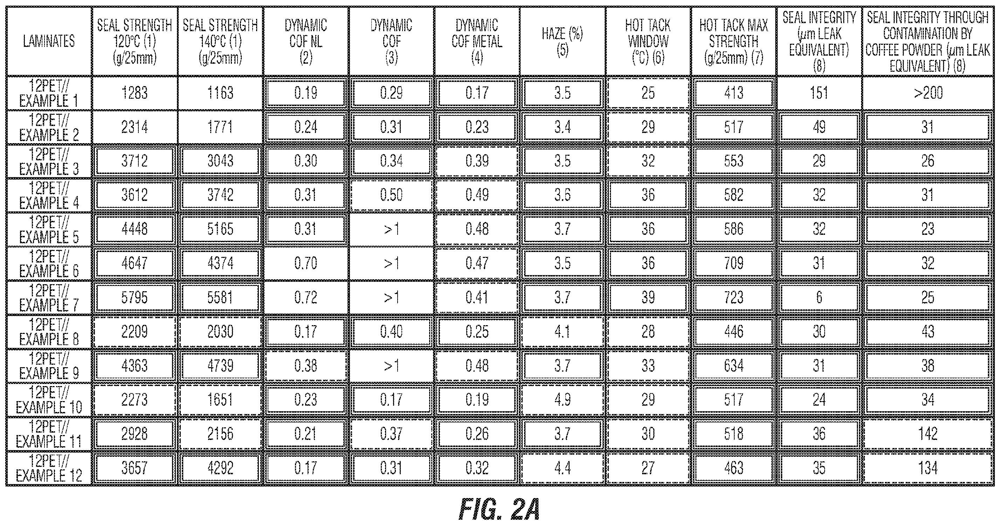

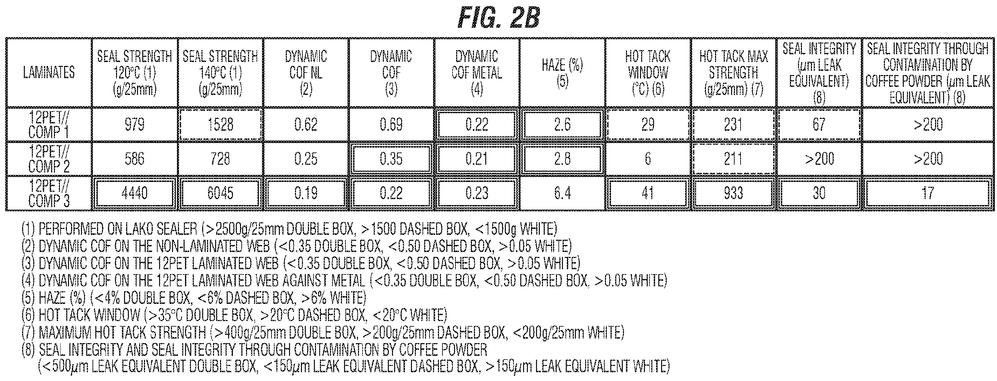

The purpose of the 12 PET lamination is to be able to measure the sealing properties; otherwise the sealing strength is higher than the resistance of the 30 µm coextruded film, which leads to film elongation and breakage rather than to a real seal strength measurement Below is Figure 2 that provides measurements of various films.

Increasing the PE-co-C6-α-olefin copolymer total thickness (Examples 1 to 7) increases the seal strength at 120 and 140°C. A 6 µm SP1540 tie-layer allows already reaching more than 3000g/25mm at 120 and 140°C. A tie-layer of PE-co-α-olefin copolymer of 8 µm allows nearly reaching the seal strength of a 40 µm OS8 laminate (Comp. 3 vs. Example 5). COF before 12 PET lamination is maintained low, *e.g.,* <0.50 and often < 0.35, when the layer contains an antistatic agent coupled with a slip agent, *i.e.,* here Armostat 600 + Erucamide. Associating slip agent with antistatic agent in core and thick tie-layer reaches a low sealant skin COF. Indeed, antistatic agent helps the migration of Erucamide probably by swelling the polymer matrix and increasing the Erucamide diffusion coefficient in the matrix; however, that hypothesis is not one to which this disclosure is bound. Here, Armostat 600 was used, but any kind of other migratory antistatic agent may be also used in addition or as a replacement. Examples 6 and 7 contain only Erucamide in the tie layer and no antistatic agent, further, COFs before lamination are much higher compared to Examples 1 to 5. After PET lamination, the laminate sealant side COF is generally higher than before lamination because PET and adhesive, such as a solvent-based adhesive, are absorbing a part of the slip agent. COF against metal is interesting to evaluate to ascertain whether the film will be machinable on VFFS. Usually if COF metal below 0 50, then there is no problem to use the film on VFFS. Accordingly, here, all films are usable on VFFS.

Adding antistatic migratory agent and slip migratory agent within the skin allows one to reach very low COFs and also maintain high seal strength levels Additives added to a thin skin layer helps to permit those additives stay at the surface, and realize their purpose by also using use less of them in order to manipulate the film to have desired results in a more economic fashion. Example 5 with Erucamide at COF of 0.39 vs. Example 6 without Erucamide at COF of 0.70 exemplifies the topic sentence.

Decreasing skin thickness with same amount of particles, *e*.*g*., Example 9 at COF of 0.38 vs. Example 5 at COF of 0.31, increases significantly the COF before lamination, with nearly no impact on the seal strength levels.

Decreasing the amount of particles in a 1 µm skin layer from 10000 ppm (Example 2) to 5000 ppm (Example 10) reaches similar sealing and COF properties. Thus, decreasing particles in skin to lower than from 10000 ppm as well as lower than from 5000 ppm maintains good COF properties.

Using another supplier of PE-co-α-olefin copolymer inside a similar structure (Example 11 with Exceed and Example 2 with Evolue) leads to similar performances. According, different brand of similar resins may also be used within similar results for the films. Seal through contamination is not as good with Exceed (Example 11) as with Evolue (Example 2). However, this parameter remains acceptable with Exceed.

Using a soft polymer, here, Vistamaxx^{®} 3980FL (Example 12) vs. only PP (Example 2) in the core layer boosts the seal strength level further, *e.g.,* + 50-60% at 120°C and + 140% at 140°C, thus, adding the soft polymer of Vistamaxx^{®} into the core layer enhances the impact of the thick PE-co-α-olefin copolymer use tie-layer. Nevertheless, the soft polymer also induces a small downgrade of the seal integrity through contamination (Example 12 vs. Example 2), but this parameter remains acceptable

Having only the soft polymer of Vistamaxx^{®} 3980FL in tie and core blended with PP, and without using any PE-co-α-olefin copolymer (Comp. 1), even if it improves sealing as compared to if the absence of a soft polymer with similar structure (Comp. 2), the seal strength is not as good as the films that contain the PE-co-α-olefin copolymer (Examples 2 to 12) In addition, without the use of PE-co-α-olefin copolymer, it is not possible to reach excellent seal integrities, especially seal through contamination. The PE-co-α-olefin copolymer is beneficial within films, especially when using significant thicknesses of that product within the films.

Disclosed now are prescriptions aimed at providing improved films in line with the discussion herein.
- Use PE-co-Co-α-olefin copolymer (from Mitsui, ExxonMobil or others) in the skin layer and in tie-layer.
- Use a thin, *i.e.,* close to 1.0 µm or lower, skin layer that includes antiblock particles sized from 1000 to 20000 ppm, preferably from 3000 to 15000 ppm, and having a diameter from 2 to 15 µm, preferably from 3 to 10 µm.
- Use a thick tie layer between core and the sealant skin that contains slip agent, *e*.*g*. Erucamide, and antistatic agent, *e.g.,* Armostat 600, to contribute to the COF control of the sealant side, but any other kind of migratory slip agent may be used including oleiamide or GMS.
- Use a core based on PP, and optionally include soft polymer(s), such as EP copolymer(s), EPB terpolymer(s), combinations thereof, to enhance the sealing performances. Vistamaxx^{®} is an example of a soft polymer.

The other side of the core layer may have any kind of polymer(s), which will adhere to PP core. Examples of such polymer(s) include EP copolymer, EPB terpolymer, or even a combination of 2 layers comprising for instance a compatibilizer tie layer containing a polyolefin-g-MAH, and a barrier top layer as EVOH, PETG, ionomer, nylon, polyether, polycarbonate, or combinations thereof. The opposite layer to the sealant layer may be treated, e.g., corona, flame, plasma or chemical, to enhance its surface tension in order to be able to be coated, printed by inks, metallized, receive deposition of metal oxides, receive deposition of solvent- or water-based coatings, primers, or to be laminated by any lamination techniques used for plastic films.

The disclosed coextruded films may be biaxially oriented as a standard BOPP (MDX from 3 to 7 and TDX from 5 to 12) in order to obtain a coextruded multilayered structure.

The disclosed films may be manufactured into thick multilayered films ranging from 10 to 200 µm in order to reach good mechanical properties.

The core layer may include any PP, including isotactic PP, film grade, in order to improve drastically the mechanical properties of the films, such as those on the following non-laminated structures.

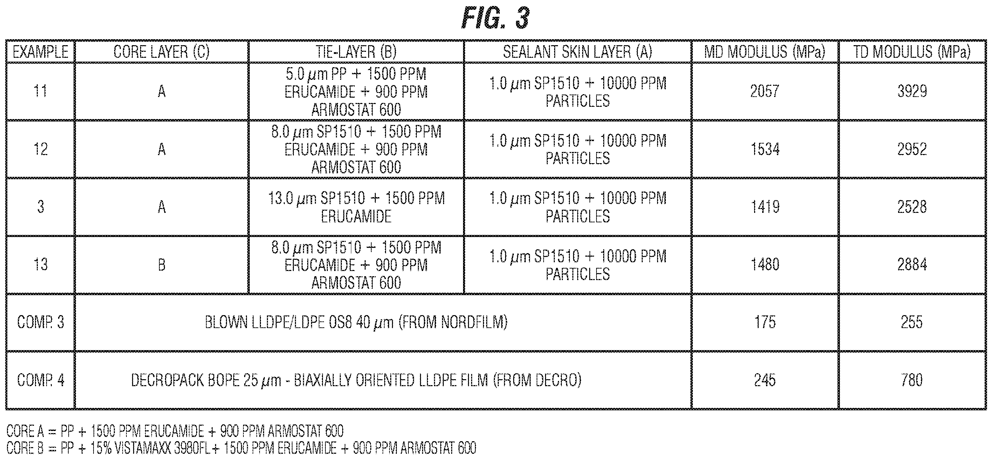

All films presented in Figure 3 are 30 µm thick except for 40OS8, which is a 40 µm PE blown film and Decropack BOPE, which is a 25 µm bi-oriented LLDPE film.

In Figure 3, the examples' stretching ratio in machine direction was 5 and in transverse direction 9 (except for Comp. 3 and Comp. 4).

Considering Example 11 is a standard OPP film ( only 1 µm of PE-co-C6-α-olefin copolymer used in skin) using up to 8 (Example 12), then 13 µm (Example 3) of PE-co-C6-α-olefin copolymer in the tie layer does not impact too much the mechanical properties of the non-laminated film: loss of 23% of MD and 25% of TD modulus when 8 µm of PP is replaced by 8 µm of PE-co-C6-α-olefin copolymer (26% of the film), and loss of 31% of MD and 36% in TD modulus when 13 µm of PP is replaced by 13 µm of PE-co-C6-α-olefin copolymer (43% of the film).

In Example 13, 15% of EP copolymer, *i.e.,* Vistamaxx^{®}, is blended in the core layer, and this induces an additional modulus loss, but modulus remains very high compared to 40µm PE leaving open the ability to down-gauge the sealable web to a laminate and improving the web handling during further process as printing, coating, metallizing, metal-oxide depositing, and/or laminating. There is a loss of 28% of MD and 27% of TD modulus when 8 µm of PP is replaced by 8 µm of PE-co-C6-α-olefin copolymer and core is blended with 15% Vistamaxx^{®}.

Comp. 3 is a blown LLDPE-LDPE blown film using Nordfilm PE resin and Comp. 4 is a BOPE film, *i.e.,* bi-oriented LLDPE, using Decro PE resin. Even if BOPE exhibits higher MD and TD modulus than blown film, both films are far below all the formulation based on PP core, e.g., Examples 3, 11, 12 and 13, even when the PP core was blended with 15 wt% of Vistamaxx^{®} 3980FL, *i.e.,* Example 13. Then, at same thickness the mechanical properties of the film are much higher than what is available today.

Example embodiments include a multi-layered, bi-oriented film based on a PP core, or a blend of PP polymer(s) with EP copolymer(s), EPB terpolymer(s), other soft polymer(s), or combinations thereof that include at least one thick layer, e.g., from 1.0 through 15 µm, of an ethylene-based resin, which is a copolymer or terpolymer of ethylene and one or more α-olefin of 4 to 10 carbon atoms, preferably from 5 to 8 carbon atoms, which may also satisfy the following: (1) the melt flow rate (MFR) at 190°C, under a load of 2.16 kg in a range of 0.1 to 50 g/10 min, and a density in a range of 875 to 970 kg/m³, preferably in a range of 890 to 920 kg/m³. Such film may also include a tie-layer located between the core and an external thin sealant layer, which may be based on the same type of α-olefin of 4 to 10 carbon atoms or any other type of sealant layer, and may also have a thickness of less than 1.5 µm, which is good, for example, in both fin and lap seal applications. The skin layer of such films may include any type of particles to decrease COF, to improve winding and anti-blocking behavior as solid particles from 2 to 15 µm diameter, more preferably from 3 to 10 µm, in a ratio from 1000 to 20000 ppm, more preferably from 3000 to 15000 ppm. This skin layer may include migratory agent(s) to control COF, such as Erucamide, silicone-based product(s) or any other long chain lubricants. In other embodiments, this film may include migratory or non-migratory agents, *e.g.*, Erucamide, antistatic agents, silicone based product, oleilamide, in any or all of the film's layers in order to manipulate COF. The film may be stretched 3 to 7 times in machine direction and 5 to 12 times in transverse direction on a sequential or a simultaneous OPP line. The film may also include a fourth layer, which may be any polyolefin(s) that are coextruded on the other side (*i*.*e*., the non-sealant side or second side) of the core and optionally treated through corona, flame, plasma, or chemical treatment to enable the film to then be printed, laminated, metallized, coated with solvent-based or water-based coatings, metal, metal oxide, and so forth. In other embodiments, the film may include a fourth layer coextruded on the other side of the core for compatibilizing a fifth polar layer. This fourth layer may include a polyolefin-g-MAH and the fifth layer may include one or more polar polymer(s), such as EVOH, nylon, ionomer, polyester, polyether, or a mixture thereof. In other embodiments, the film may include a treated side laminated to PET, OPP, OPA, paper, metal or any other synthetic or natural film web. The film may include a treated layer coated by a barrier coating, such as PVdC, EVOH, PVOH, polyester, polyamide, nylon, metal layer, or metal oxide layer, optionally using a primer layer between the film and the coating. The coating process may be solvent-based, water-based or solventless, as in vacuum metallization, vacuum metal oxide deposition, plasma deposition and/or powder coating of the film.

Example embodiments also include a multi-layered packaging bag with combination of fin seal and crimp seal or a combination of a lap seal and crimp seal that may include Layer A of a PE-co-α-olefin of 4 to 10 carbon atoms from 0.25 to 1.5 µm, or from a EP copolymer or from a EPB terpolymer or a mix of thereof containing 1000 to 20000 ppm of mineral or synthetic anti-block particles having an average diameter from 2 to 15 µm and which may contain slip agent(s) to adjust COF. The bag may also include a Layer B, located between the core Layer C and the Layer A, of a PE-co-α-olefin of 4 to 10 carbon atoms from 1.0 to 15 µm, which may also be blended with other polyolefin(s) to adjust COF and/or adhesion to the core layer C, and which may contain migratory slip and/or antistatic agent(s) to adjust COF. The bag may also include Layer C, which is a PP core layer, which provides mechanical resistance of the film, and may be blended with polyolefin copolymers terpolymers, or combinations thereof that may or may not be soft polymers, and may contain slip and/or antistatic agent(s) to adjust surface COF. The bag may also include Layer D, which is coextruded on the other side of the layer C and which is a standard polyolefin, such as EP copolymer(s), EPB terpolymer(s), combinations thereof, and optionally be surface-treated in order to optionally permit lamination to any kind of web (OPP, OPET, OPA, cast PP, cast PE, blown PE, paper, metal foil, any kind of web usually used within the packaging area), in order to be: printable, coatable by polymer coating (solvent-based, water-based or solventless), by metal coatings, by metal-oxide coatings, or combinations thereof in order to enhance specific properties, such as slip, barrier, appearance, heat resistance scratch resistance or mechanical resistance. Layer D may also include polymer(s), which will compatibilize a PP-based core with a polar skin, such as a polyolefin-g-MAH. The bag may also include Layer E, which is a layer deposited by coextrusion on layer D. Layer E may include EVOH, polyester, polyether, nylon, ionomer, or a mix thereof. Instead of coextrusion, Layer E may be printed, coated, metallized under vacuum, deposited as a metal oxide on that surface, and/or laminated.

### INDUSTRIAL APPLICABILITY

The disclosed multilayered films may be are as stand-alone films, laminates, or webs. Or, the multilayered films may be sealed, coated, metallized, and/or laminated to other film structures, such as discussed herein. The disclosed multilayered films may be prepared by any suitable methods comprising the steps of co-extruding a multilayered film according to the description and claims of this specification, orienting and preparing the film for intended use such as by coating, printing, slitting, or other converting methods.

For some applications and as previously discussed, it may be desirable to laminate the multilayered films to other polymeric film or paper products for purposes such as package decor including printing and metallizing. These activities are typically performed by the ultimate end-users or film converters who process films for supply to the ultimate end-users.

The prepared multilayered film may be used as a flexible packaging film to package an article or good, such as a food item or other product. In some applications, the film may be formed into a pouch type of package, such as may be useful for packaging a beverage, liquid, granular, or dry-powder product.

In view of the foregoing, various bags, packages, pouches (*e.g*., stand-up, vertical fill-and-seal, horizontal fill-and-seal, etc.), films, laminates, and other structures may be formed from the above-described films, wherein such may have products (*e.g.*, food, beverages) of any phase that require seals having requisite integrity and/or barriers to water and/or oxygen transmission with low thickness.

The foregoing is directed to example embodiments of the disclosed invention. The scope of the disclosed apparatuses, systems and methods are determined by one or more claims.

## Claims

1. A sealable film comprising:
a sealant layer comprising a skin layer on an intermediate layer, wherein the skin layer comprises antiblock particles, one or more ethylene-co-α-olefins and a thickness from 0.25 µm through 4.0 µm, wherein α-olefins polymerized with ethylene in the one or more ethylene-co-α-olefins comprise one or more C₄-C₁₀ α-olefins; and
the intermediate layer comprises one or more ethylene-co-α-olefins, antistatic agent, slip agent, and, optionally, thermoplastic olefin copolymer resins, and has a thickness from 1 µm through 15 µm, wherein α-olefins polymerized with ethylene in the one or more ethylene-co-α-olefins comprise one or more C₄-C₁₀ α-olefins; and
a core layer having a first side and a second side, wherein the core layer comprises polypropylene, antistatic agent, slip agent, one or more soft polymers, wherein the first side is at least proximate to the sealant layer,
wherein the sealable film is coextruded and machinable into a vertical form fill seal packaging or a stand-up pouch, and
wherein the sealable film comprises a seal strength of at least 1275g/25mm at 120°C performed at 5 mm/s on a Lako sealer Model SL10 equipped with crimp jaws, operating under a pressure of 25N/cm² for 0.20s, a hot-tack strength of at least 400g/25mm within a temperature range from 25 to 40°C performed at 8.3cm/s on a Lako hot tack Model SL10 equipped with crimp jaws, operating under a pressure of 25 N/cm² for 0.50 s, and the crimp jaws for measurement of the hot-tack strength being heated from 60 to 150°C at measurement intervals of 10°C, and a dynamic coefficient of friction of <0.50 on metal performed under ASTM D 1894 method e.

2. The sealable film of claim 1, further comprising one or more additives in one or more layers of the sealable film.

3. The sealable film of claim 1, further comprising another one or more coextruded or coated layers comprising primers, tie layers, sealing layers, metallized or metal layers, printreceptive layers or combinations thereof on the second side.

4. The sealable film of claim 1, wherein the slip agent and the antistatic agent in the sealable film are migratory.

5. The sealable film of claim 1, further comprising an adhesive on the second side.

6. The sealable film of claim 1, wherein the sealable film is oriented in at least one direction.

7. The sealable film of claim 1, wherein the one or more soft polymers are polymers comprising ethylene.

8. The sealable film of claim 1, wherein the intermediate layer comprises more than one type of the ethylene-co-α-olefins.

9. The sealable film of claim 1, wherein the sealant layer further comprises from 1000 to 20000 ppm of the antiblock particles.

10. The sealable film of claim 1, wherein the intermediate layer is thicker than the skin layer.

11. The sealable film of claim 1, wherein the sealant layer is thicker than the core layer.

12. The sealable film of claim 1 comprising a package having a seal integrity of less than 50 µm.

13. The sealable film of claim 1, further comprising a fourth layer on the second side for compatibilizing a fifth polar layer, and optionally comprising the fifth polar layer on the fourth layer.

## Patentansprüche

1. Siegelbare Folie, umfassend:
eine Versiegelungsmittelschicht, umfassend eine Hautschicht auf einer Zwischenschicht, wobei die Hautschicht Antiblockpartikel, ein oder mehrere Ethylenco-α-Olefine und eine Dicke von 0,25 µm bis einschließlich 4,0 µm umfasst, wobei die α-Olefine, die mit Ethylen in dem einen oder den mehreren Ethylen-co-α-Olefinen polymerisiert werden, ein oder mehrere C₄-C₁₀-α-Olefine umfassen; und
die Zwischenschicht ein oder mehrere Ethylen-co-α-Olefine, ein Antistatikum, ein Gleitmittel und, optional, thermoplastische Olefin-Copolymerharze umfasst und eine Dicke von 1 µm bis einschließlich 15 µm aufweist, wobei die α-Olefine, die mit Ethylen in dem einen oder den mehreren Ethylen-co-α-Olefinen polymerisiert werden, ein oder mehrere C₄-C₁₀-α-Olefine umfasst; und
eine Kernschicht, die eine erste und eine zweite Seite aufweist, wobei die Kernschicht Polypropylen, Antistatikmittel, Gleitmittel, ein oder mehrere weiche Polymere umfasst, wobei die erste Seite mindestens in der Nähe der Versiegelungsmittelschicht liegt,
wobei die siegelbare Folie coextrudiert und zu einer vertikalen Form-, Füll- und Siegelverpackung oder einem Standbeutel verarbeitet werden kann, und
wobei die siegelbare Folie eine Siegelnahtfestigkeit von mindestens 1275 g/25 mm bei 120 °C, die bei 5 mm/s auf einer Lako-Siegeleinrichtung Modell SL10 durchgeführt wird, die mit Crimp-Stempeln ausgestattet ist, die bei einem Druck von 25 N/cm² für 0,20 s betrieben werden, eine Hot-Tack-Festigkeit von mindestens 400 g/25 mm innerhalb eines Temperaturbereichs von 25 bis 40 °C, die bei 8,3 cm/s auf einem Lako-Hot-Tack Modell SL10 durchgeführt wird, die mit Crimp-Stempeln ausgestattet ist, die bei einem Druck von 25 N/cm² für 0,50 s betrieben werden, und die Crimp-Stempel für eine Messung der Hot-Tack-Festigkeit, die in Messintervallen von 10 °C von 60 auf 150 °C erhitzt werden, und ein dynamischer Reibungskoeffizient von <0,50 auf Metall, gemäß ASTM D 1894 Verfahren e durchgeführt, umfasst.

2. Siegelbare Folie nach Anspruch 1, ferner umfassend ein oder mehrere Additive in einer oder mehreren Schichten der siegelbaren Folie.

3. Siegelbare Folie nach Anspruch 1, ferner umfassend eine oder mehrere weitere coextrudierte oder beschichtete Schichten, umfassend Grundierungen, Verbindungsschichten, Versiegelungsschichten, metallisierte oder metallische Schichten, druckaufnehmende Schichten oder Kombinationen davon auf der zweiten Seite.

4. Siegelbare Folie nach Anspruch 1, wobei das Gleitmittel und das Antistatikmittel in der siegelbaren Folie migrierbar sind.

5. Siegelbare Folie nach Anspruch 1, ferner umfassend einen Klebstoff auf der zweiten Seite.

6. Siegelbare Folie nach Anspruch 1, wobei die siegelbare Folie in mindestens eine Richtung orientiert ist.

7. Siegelbare Folie nach Anspruch 1, wobei das eine oder die mehreren weichen Polymere Polymere sind, umfassend Ethylen.

8. Siegelbare Folie nach Anspruch 1, wobei die Zwischenschicht mehr als eine Art der Ethylen-co-α-Olefine umfasst.

9. Siegelbare Folie nach Anspruch 1, wobei die Siegelschicht ferner 1.000 bis 20.000 ppm der Antiblockpartikel umfasst.

10. Siegelbare Folie nach Anspruch 1, wobei die Zwischenschicht dicker als die Hautschicht ist.

11. Siegelbare Folie nach Anspruch 1, wobei die Siegelschicht dicker als die Kernschicht ist.

12. Siegelbare Folie nach Anspruch 1, umfassend eine Verpackung, die eine Siegelintegrität von weniger als 50 µm aufweist.

13. Siegelbare Folie nach Anspruch 1, ferner umfassend eine vierte Schicht auf der zweiten Seite zum Kompatibilisieren einer fünften polaren Schicht und optional umfassend die fünfte polare Schicht auf der vierten Schicht.

## Revendications

1. Film scellable comprenant :
une couche de scellant comprenant une couche de revêtement sur une couche intermédiaire, dans lequel la couche de revêtement comprend des particules antiblocage, une ou plusieurs co-α-oléfines d'éthylène et une épaisseur allant de 0,25 µm à 4,0 µm, dans lequel les α-oléfines polymérisées avec de l'éthylène dans la ou les co-α-oléfines d'éthylène comprennent une ou plusieurs α-oléfines en C₄-C₁₀ ; et
la couche intermédiaire comprend une ou plusieurs co-α-oléfines d'éthylène, un agent antistatique, un agent glissant et, éventuellement, des résines copolymères d'oléfines thermoplastiques, et a une épaisseur allant de 1 µm et 15 µm, dans lequel les α-oléfines polymérisées avec de l'éthylène dans la ou les co-α-oléfines d'éthylène comprennent une ou plusieurs α-oléfines en C₄-C₁₀ ; et
une couche centrale ayant une première face et une seconde face, dans lequel la couche centrale comprend du polypropylène, un agent antistatique, un agent glissant, un ou plusieurs polymères souples, dans lequel la première face est au moins proche de la couche de scellant,
dans lequel le film scellable est coextrudé et usinable en un conditionnement par formage-remplissage-scellage vertical ou en un sachet tenant debout, et
dans lequel le film scellable présente une résistance de scellage d'au moins 1275 g/25 mm à 120 °C, réalisée à 5 mm/s sur une scelleuse Lako modèle SL10 équipée de mâchoires de sertissage, fonctionnant sous une pression de 25 N/cm² pendant 0,20 s, une tenue à chaud des soudures d'au moins 400 g/25 mm dans une plage de température allant de 25 à 40 °C, réalisée à 8,3 cm/s sur un hot tack Lako modèle SL10 équipé de mâchoires de sertissage, fonctionnant sous une pression de 25 N/cm² pendant 0,50 s, et les mâchoires de sertissage pour la mesure de la tenue à chaud des soudures étant chauffées de 60 à 150 °C à des intervalles de mesure de 10 °C, et un coefficient de frottement dynamique de < 0,50 sur un métal réalisé selon le procédé e de la norme ASTM D 1894.

2. Film scellable selon la revendication 1, comprenant en outre un ou plusieurs additifs dans une ou plusieurs couches du film scellable.

3. Film scellable selon la revendication 1, comprenant en outre une ou plusieurs autres couches coextrudées ou enduites comprenant des apprêts, des couches de liaison, des couches de scellement, des couches métallisées ou métalliques, des couches réceptives à l'impression ou des combinaisons de celles-ci sur la seconde face.

4. Film scellable selon la revendication 1, dans lequel l'agent glissant et l'agent antistatique dans le film scellable sont migrateurs.

5. Film scellable selon la revendication 1, comprenant en outre un adhésif sur la seconde face.

6. Film scellable selon la revendication 1, dans lequel le film scellable est orienté dans au moins une direction.

7. Film scellable selon la revendication 1, dans lequel le ou les polymères souples sont des polymères comprenant de l'éthylène.

8. Film scellable selon la revendication 1, dans lequel la couche intermédiaire comprend plus d'un type de co-α-oléfines d'éthylène.

9. Film scellable selon la revendication 1, dans lequel la couche de scellant comprend en outre de 1000 à 20 000 ppm de particules antiblocage.

10. Film scellable selon la revendication 1, dans lequel la couche intermédiaire est plus épaisse que la couche de revêtement.

11. Film scellable selon la revendication 1, dans lequel la couche de scellant est plus épaisse que la couche centrale.

12. Film scellable selon la revendication 1 comprenant un emballage dont l'intégrité de scellage est inférieure à 50 µm.

13. Film scellable selon la revendication 1, comprenant en outre une quatrième couche sur la seconde face pour compatibiliser une cinquième couche polaire, et comprenant éventuellement la cinquième couche polaire sur la quatrième couche.
